# EUROPEAN PATENT SPECIFICATION

(11) **EP 0 586 124 B1**
(45) Date of publication and mention of the grant of the patent: **24.09.1997**
(21) Application number: 93306382.8
(22) Date of filing: 12.08.1993
(51) Int. Cl.: B60C 11/04

(54) **Heavy duty tyre**
LKW-Reifen
Bandage pneumatique pour poids-lourds

(30) Priority: 17.08.1992 JP 241284/92; 15.04.1993 JP 114149/93
(43) Date of publication of application: 09.03.1994
(73) Proprietor: Sumitomo Rubber Industries Ltd., Kobe-shi, Hyogo-ken (JP)
(72) Inventor: Fujiwara, Kenichi, Shijimi-cho, Miki-shi, Hyogo-ken (JP)
(74) Representative: Stewart, Charles Geoffrey

(56) References cited:
- EP-A- 0 235 072
- EP-A- 0 422 571
- EP-A- 0 454 394
- FR-A- 1 568 310

## Description

The present invention relates to a pneumatic tyre, more particularly a heavy duty tyre in which tyre noise is reduced without deteriorating traction performance and tread durability.

In heavy duty tyres, e.g. truck/bus tyres and the like, rib-type tread patterns are widely used because of the heavy service loads. However, in order to improve the traction performance, it is also known to use a tread pattern in which axial grooves are provided in addition to the circumferential grooves thereby defining blocks.

During running, through such axial grooves, the air compressed between the tread surface and the road surface is discharged. As a result, a tyre noise which is so-called air-pumping noise is generated.

On the other hand, tyre noise increases with increasing running speed. However, noise is important to improve the earth environment to reduce tyre noise.

In order to reduce the noise from a tyre tread pattern, it has been proposed to decrease the number of axial and circumferential grooves, and to decrease the total volume of such grooves.

These means can decrease the above-mentioned air-pumping noise, but other running performance characteristics, especially traction performance are generally decreased.

Thus, noise reduction and improvement in traction performance are in an antinomic relationship.

A tyre according to the preamble of claim 1 is known, for example, from EP-A-0422571.

It is therefore, an object of the invention to provide a heavy duty tyre, in which tyre noise, especially air-pumping noise is reduced without deteriorating the traction performance, durability and the like.

According to the present invention, a heavy duty tyre comprising a tread portion, said tread being provided with a plurality of circumferential grooves, and a plurality of axial grooves, said circumferential grooves extending continuously in the circumferential direction of the tyre so as to axially divide the tread into rib portions, each said axial groove extending across one of said rib portions so as to have at least one end opened to one of said circumferential grooves to divide the rib portion into tread blocks, wherein in the state where the tyre is mounted on its regular rim and inflated to its regular inner pressure and loaded with its regular load, the ratio (ΣVh/ΣVv) of the total volume (ΣVh) of said axial grooves in the ground contacting part of the tread to the total volume (ΣVv) of the said circumferential grooves in the ground contacting part is in the range of from 0.3 to 0.6, characterised in that the circumferential grooves have a width of from 1.0 to 15 % of the tread width measured between the edges of the tread and the axial grooves have a width of from 1.0 to 15 % of the tread width, said circumferential grooves and said axial grooves defining a plurality of crosses each surrounded by corners of tread blocks, all the corners of said crosses of at least one of the circumferential grooves being obtuse-angled corners, and all said obtuse-angled corners in each of the crosses are disposed at different positions with respect to both the circumferential direction and axial direction of the tyre.

An embodiment of the present invention will now be described by way of example only, in conjunction with the accompanying drawings, in which:
Fig.1 is a cross sectional view of a tyre according to the present invention;
Fig.2 is a developed plan view showing part of the tread pattern thereof;
Fig.3 is a view for explaining the groove volume ratio;
Fig.4 is an enlarged plan view showing a cross of one circumferential groove and two axial grooves;
Fig.5 is an enlarged perspective view showing the cross of Figure 4;

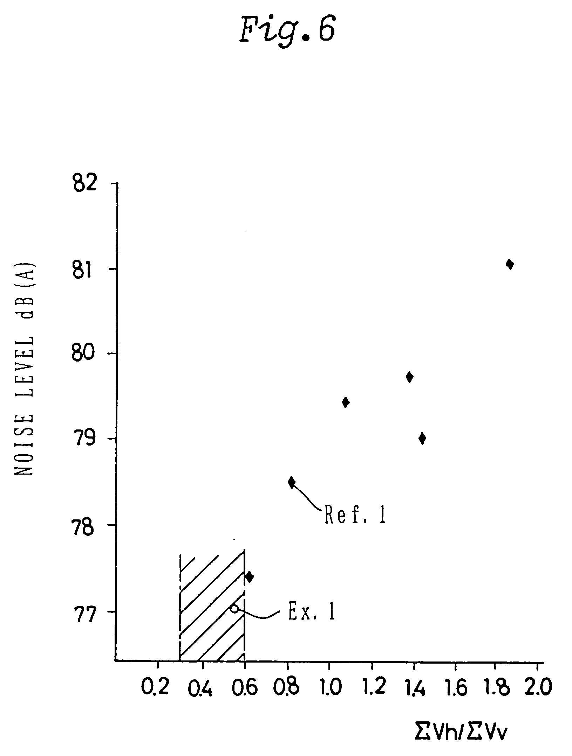

Fig.6 is a graph showing the relationship between the groove volume ratio and noise level; and

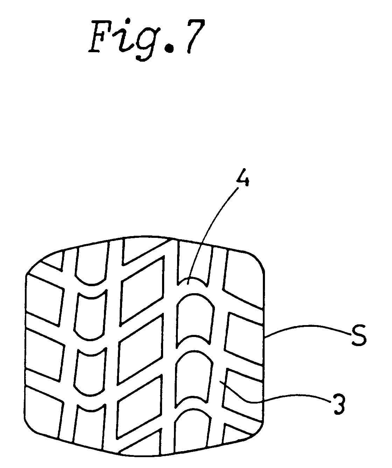

Fig.7 is a plan view showing a tread pattern used in comparison tests.

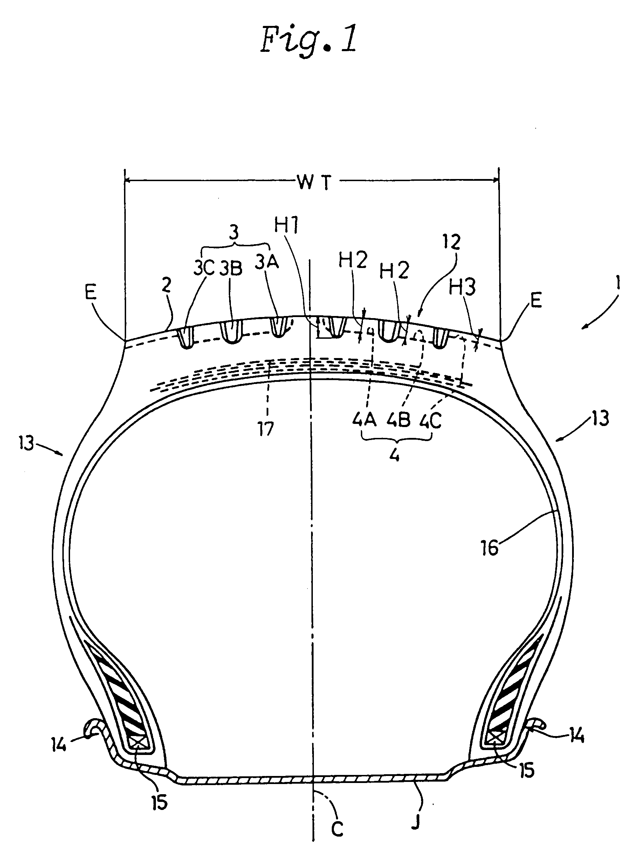

In Figs.1 to 4, the heavy duty tyre 1 according to the invention is a truck/bus radial tyre of size 11R22.5, which has a tread portion 12, a pair of axially spaced bead portions 14, and a pair of sidewalls 13 extending between the tread edges and the bead portions 14.

The tyre 1 further comprises a pair of bead cores 15 one disposed in each of the bead portions 14, a carcass 16 extending between the bead portions 14 and turned up around the bead cores 15 from the axially inside to outside of the tyre, and a belt 17 disposed radially outside the carcass 16 and inside the tread portion 12.

The carcass 16 comprises at least one ply, in this embodiment one ply, of cords arranged at an angle of 70 to 90 degrees with respect to the tyre equator C to provide a radial or semiradial carcass arrangement.

For the carcass cord, organic fibre cords, e.g. nylon, polyester, aromatic polyamide or the like, or steel cords can be used.

The belt 17 in this embodiment comprises four plies, each composed of parallel cords inclined with respect to the tyre equator C.

For the belt cords, steel cords and organic fibre cords, e.g. nylon, polyester, aromatic polyamide or the like can be used.

The tread portion 12 has a tread surface 2 having a plurality of circumferential grooves 3 extending circumferentially of the tyre and a plurality of axial grooves 4 extending in a direction crosswise to the circumferential grooves 3.

In the present invention, each circumferential groove 3 is a groove extending continuously in the circumferential direction of the tyre, and each axial groove 4 is a groove extending between the adjacent circumferential grooves or between the axially outermost circumferential groove and the adjacent tread edge E, at least one end of which is opened to one of the circumferential grooves 3.

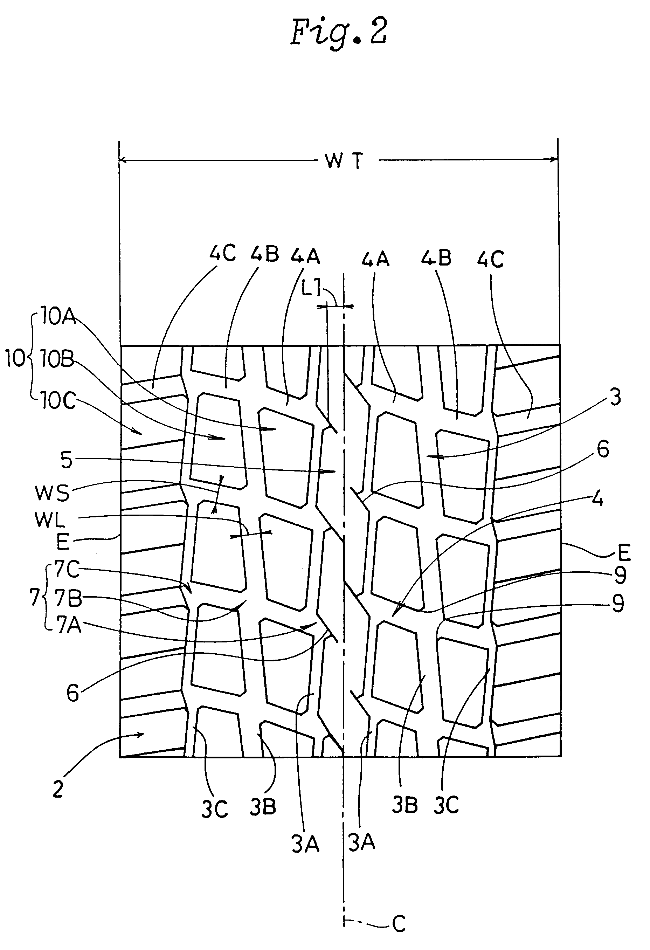

In this embodiment, as shown in Fig.2, the circumferential grooves 3 comprise a pair of axially inner circumferential grooves 3A each disposed on each side of the tyre equator C; a pair of middle circumferential grooves 3B each disposed axially outside each of the inner circumferential grooves 3A; and a pair of outer circumferential grooves 3C each disposed between each of the middle circumferential grooves 3B and the adjacent tread edge E.

The axial grooves 4 in this embodiment comprise axially inner axial grooves 4A extending from the inner circumferential groove 3A to the middle circumferential groove 3B, both the ends of which are opened to the circumferential grooves 3A and 3B; middle axial grooves 4B extending from the middle circumferential groove 3B to the outer circumferential groove 3C, both the ends of which are opened to the circumferential grooves 3B and 3C; and outer axial grooves 4C extending from the outer circumferential groove 3C to the tread edge E, both the ends of which are opened to the circumferential groove 3C and the tread edge E.

The centre rib 5 defined between the inner circumferential grooves 3A is not provided with such axial grooves extending across the entyre width of the centre rib, but indent portions 6 or short axial grooves each of which has an axially inner end terminated in the centre rib and an axially outer end opened to the inner circumferential groove. Grooves 3A are provided on both sides of the centre rib.

The widths WL of the circumferential grooves 3A, 3B and 3C are in the range of from 1.0 to 15 % of the tread width WT.

In this embodiment, the middle circumferential grooves 3B are wider than the inner and shoulder circumferential grooves 3A and 3C.

The depths H1 of the circumferential grooves 3A, 3B and 3C are in the range of from 6 to 16 % of the tread width WT.

In this embodiment, all the circumferential grooves 3A, 3B and 3C have substantially the same depth.

The widths WS of the axial grooves 4A, 4B and 4C are in the range of from 1.0 to 15 % of the tread width WT.

The depths H2 of the inner and middle axial grooves 4A and 4B are in the range of from 6 to 16 % the tread width WT.

In this embodiment, the depths H2 are not larger than the depth H1 of the circumferential grooves 3.

The depth H3 of the outer axial grooves 4C are less than 25% and not less than 10% of the depth H2 of the axial grooves 4A and 4B, (10%≤H3<25%) so that the discharge of the compressed air towards both sides of the tyre is decreased to reduce the noise level, and further the circumferential rigidity of the tread shoulder portion increases to prevent the occurrence of uneven wear such as heel and toe wear. If the depth H3 is less than 10% of the depth H2, the water drainage is insufficient, and wet road grip is liable to be lost.

Here, the tread width WT is defined as the axial distance between the tread edges E.

If the groove widths WL and WS are less than 1.0 % of the tread width WT, the drainage and the wet grip performance of the tyre are insufficient. If the widths are more than 15%, the ground contact area is decreased, and as a result, tread wear is increased and uneven wear is liable to occur along the groove edges.

For a tyre size of 11R22.5, the widths WL and WS are at least 2 mm.

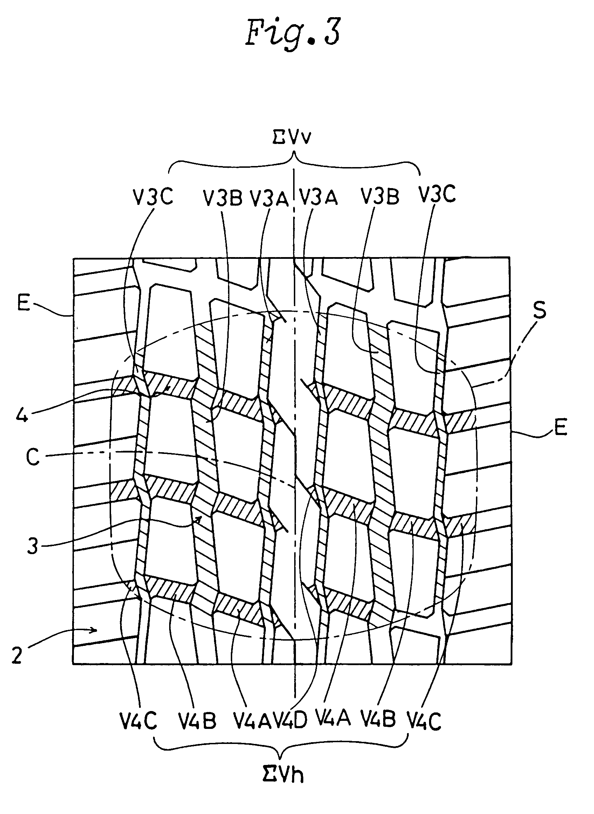

In the ground contact part S (shown in Fig.3 by the chain line) of the tread surface 2 with the tyre in its normal loaded state, the ratio between the total volume of the circumferential grooves 3 and the total volume of the axial grooves 4 is specifically defined by this invention.

Here, the normal loaded state is such that the tyre 1 is mounted on its regular rim J and inflated to its regular pressure and then loaded by its regular load.

The regular rim is the rim officially approved for the tyre by ETRTO (Europe), JATMA (Japan), TRA (USA) and the like, and the regular inner pressure and the regular load are the maximum air pressure and the maximum tyre load for the tyre officially specified in the Air-pressure/Maximum-load Table by the same associations.

According to the present invention, the ratio ΣVh/ΣVv of the total volume ΣVh of the axial grooves 4 in the ground contact part S to the total volume ΣVv of the circumferential grooves 3 in the ground contact part S is set in the range of from 0.3 to 0.6, and as a result the noise is reduced without sacrificing traction performance.

If the ratio ΣVh/ΣVv is more than 0.6, the noise level is increased.

If the ratio ΣVh/Vv is less than 0.3, the grip performance is insufficient.

In Fig.3, for example, the total circumferential groove volume ΣVv is the total of the volume (V3A) of the shaded part of the inner circumferential grooves 3A, the volume (V3B) of the shaded part of the middle circumferential grooves 3B, and the volume (V3C) of the shaded part of the outer circumferential grooves 3C.

The total axial groove volume ΣVh is the total of the volume (V4A) of the shaded part of the inner axial grooves 4A, the volume (V4B) of the shaded part of the middle axial grooves 4B, the volume (V4C) of the shaded part of the outer axial grooves 4C, and the volume (V4D) of the shaded part of the indent portions 6.

In order to set the groove volume ratio ΣVh/ΣVv in the above-mentioned range, the depth H2 and/or depth H3 of the axial grooves 4 are preferably selected, so then whereby noise generation is most effectively prevented without loss of the running performance properties of the tyre.

In this embodiment, the tread pattern has point symmetry about a point on the tyre equator.

All the circumferential grooves 3 are slightly zigzagged, and each circumferential groove 3 comprises alternately arranged long straight segments and sort straight segments.

The long segments of all the circumferential grooves 3 have the same length, and they are inclined at a small angle Θ of 2 to 10 degrees with respect to the tyre circumferential direction.

The long segments of the inner circumferential groove 3A are inclined in the same direction as the outer circumferential groove 3C, but in the middle circumferential groove 3B they are inclined in the reverse direction.

All the axial grooves 4 are generally straight, and inclined at a small angle of 0 to 30 degrees with respect to the tyre axis.

All the inner and middle axial grooves 4A and 4B are inclined in the same direction, but all the shoulder axial grooves 4C are inclined in the reverse direction.

The inner and middle axial grooves 4A and 4B extend completely across the respective ribs defined between the inner, middle and outer circumferential grooves 3A, 3B and 3C, whereby the above-mentioned two ribs on each side of the tyre equator are circumferentially subdivided into a row of inner blocks 10A and a row of middle blocks 10B, respectively.

The outer axial grooves 4C also extend completely across the ribs defined between the outer circumferential grooves 3D and the tread edges E, whereby each of the ribs is circumferentially subdivided into a row of shoulder blocks 10C.

The axially outer ends of the indent portions 6, the axially inner ends of the shoulder axial grooves 4C, and the axially inner and outer ends of the inner and middle axial grooves 4A and 4B are positioned at the short segments of the circumferential grooves 3A, 3B and 3C.

The inner axial groove line and the middle axial groove line extend in a line, but the shoulder axial groove line is bent, so that transmission of the noise generated from the axially inward part is hindered to reduce the noise level in use of the tyre.

The indent portion 6 is located as an axially inward extension of the inner axial groove line, and the axially inner end thereof is terminated before the tyre equator C. The axial distance L1 therebetween is in the range from 0.02 to 0.04 times the tread width WT.

If the distance L1 is less than 0.02 times the tread width WT, the volume of the indent portions 6 is too large which increases the air-pumping noise level.

If the distance L1 is more than 0.04 times the tread width WT, the road grip of the centre rib 6 is decreased, and the traction performance, especially that on snow covered roads is decreased.

When the axial grooves 4 cross diagonally the circumferential groove 3, acute-angled corners DA and obtuse angled corners DB are formed as a cross (7A, 7B, 7C).

The formation of acute angled corners is not preferable since uneven wear is liable to start spreading therefrom.

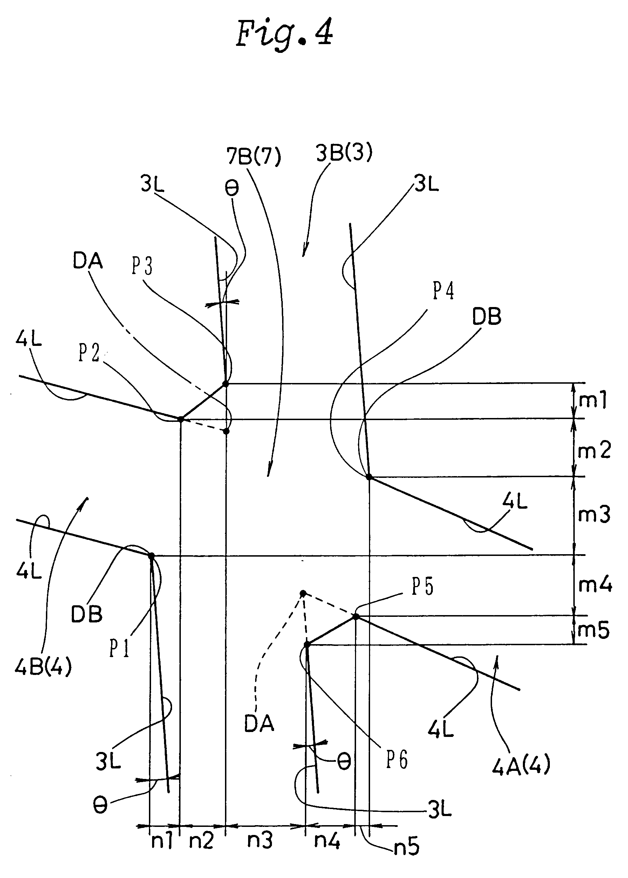

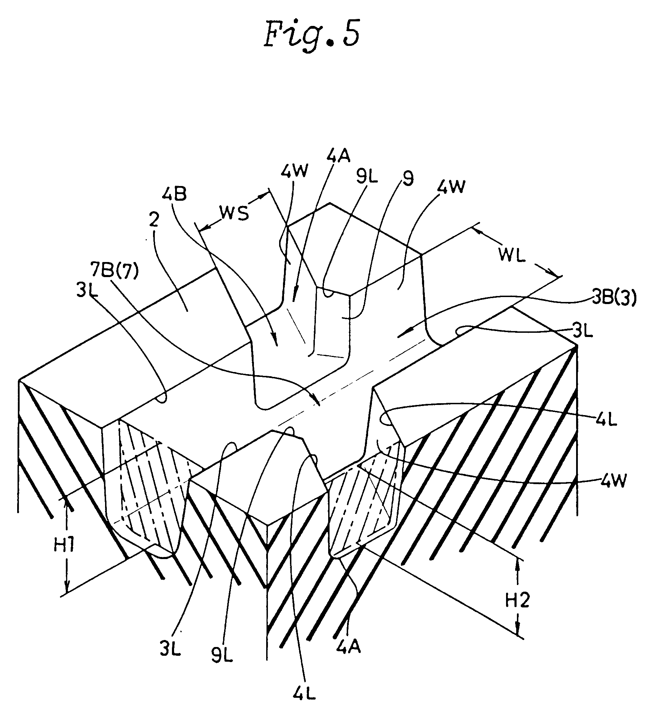

In this embodiment, therefore, such acute angled corners are rounded off, as shown in Figs.4 and 5, by providing straight sides 9L intersecting the adjacent straight sides 3L and 4L with obtuse angles.

Accordingly, all the resultant corners P1, P2 ---P5 and P6 in each cross (7A, 7B, 7C) are obtuse corners, whereby the corners are increased in rigidity and the spreading of uneven wear is suppressed. Further, such rigid corners effectively improve the traction performance.

Further, in this embodiment, all the corners P1, P2 --- P5 and P6 in each cross (7A, 7B, 7C) are disposed at different positions with respect to both the circumferential and axial directions of the tyre.

As shown in Fig.4, between the corners P1 -- P6, spaces m1, m2, m3, m4, m5 are provided in the circumferential direction, and spaces n1, n2, n3, n4, n5 are provided in the axial direction. As a result, the traction performance is improved.

Furthermore, as the above-mentioned straight sides 3L are inclined at an angle of from 2 to 10 degrees with respect to the tyre equator, the traction performance is further improved.

In the present invention, in addition to the above-mentioned circumferential grooves 3 and axial grooves 4, the tread surface 2 may be provided with narrow grooves or slits so-called sipes whose width is about 1-2 mm or less and at least one end is opened.

If the total volume of such sipes in the ground contacting part is less than 5% of the volume of the land part of the tread, such sipes do not affect the air-pumping noise, so the sipe volume is disregarded in calculating the volume ratio ΣVh/ΣVv.

Tyres of size 11R22.5 having the construction shown in Fig.1 were made by way of test and the following tests were carried out. The test results are shown in Table 1.

### A) Noise test

The noise test was carried out according to JIS C606 (Japanese Industrial Standard).

Coasting a test vehicle provided with the test tyre on a straight test course at a speed of 70 km/H for 50 metres, the maximum level in dB(A) of the passing noise sound was measured with a microphone set in the middle of the course at a position 7.5 metres from the centre line of the course at a height of 1.2 meter from the road surface.

The test tyre was mounted on its regular rim of size 7.5X22.5 and inflated to an inner pressure of 7.25kg/cm². The tyre load was 2000kgf per a tyre.

### B) Traction performance test

A gradeability test was carried out as a traction performance test. The results are indicated in an index based on that the reference tyre is 100. The larger the value, the better the traction.

### C) Wear resistance test

The amount of tread wear after running 100,000 kilometres was measured. The results are indicated by an index based on the reference tyre being 100.

The larger the value, the better the resistance.

**Table 1**

| | Ex.1 | Ref.1 |
|---|---|---|
| Tread pattern | Fig.2 | Fig.7 |
| Ground contacting area (cm²) | 450 | 450 |
| Total circumferential groove volume ΣVv (cm³) | 210 | 221 |
| Total axial groove volume ΣVh (cm³) | 113 | 181 |
| ΣVh/ΣVv | 0.44 | |
| Noise dB(A) | 77.1 | 78.5 |
| Traction performance (index) | 100 | 100 |
| Wear resistance (index) | 125 | 100 |

As described above, the heavy duty tyre of the present invention can be reduced in running noise without sacrificing traction performance and durability.

## Claims

1. A heavy duty tyre comprising a tread portion (12), said tread (12) being provided with a plurality of circumferential grooves (3), and a plurality of axial grooves (4), said circumferential grooves (3) extending continuously in the circumferential direction of the tyre so as to axially divide the tread into rib portions, each said axial groove (4) extending across one of said rib portions so as to have at least one end opened to one of said circumferential grooves to divide the rib portion into tread blocks, wherein in the state where the tyre is mounted on its regular rim and inflated to its regular inner pressure and loaded with its regular load, the ratio (ΣVh/ΣVv) of the total volume (ΣVh) of said axial grooves (4) in the ground contacting part of the tread to the total volume (ΣVv) of the said circumferential grooves (3) in the ground contacting part (S) is in the range of from 0.3 to 0.6, characterised in that the circumferential grooves (3) have a width of from 1.0 to 15 % of the tread width (WT) measured between the edges of the tread and the axial grooves (4) have a width of from 1.0 to 15 % of the tread width (WT), said circumferential grooves (3) and said axial grooves (4) defining a plurality of crosses (7A,7B,7C) each surrounded by corners of tread blocks, all the corners (P1,P2,P3,P4,P5,P6) of said crosses of at least one of the circumferential grooves being obtuse-angled corners, and all said corners (P1,P2,P3,P4,P5,P6) in each of the crosses (7A,7B,7C) are disposed at different positions with respect to both the circumferential and axial directions of the tyre.

2. A heavy duty tyre according to claim 1, characterised in that said circumferential grooves (3) include a pair of inner circumferential grooves (3A) each disposed on each side of the tyre equator, a pair of middle circumferential grooves (3B) each disposed axially outward of each said inner circumferential groove, and a pair of outer circumferential grooves (3C) each disposed between each said middle circumferential groove (3B) and the adjacent tread edge (E), said axial grooves (4) include inner axial grooves (4A) extending from the inner circumferential grooves (3A) to the middle circumferential grooves (3B), middle axial grooves (4B) extending from the middle circumferential grooves (3B) to the outer circumferential grooves (3C), and outer axial grooves (4C) extending from the outer circumferential grooves (3C) to the tread edges (E).

3. A heavy duty tyre according to claim 2, characterised in that a centre rib (5) defined between the inner circumferential grooves (3A) is continuous in the circumferential direction of the tyre, said centre rib (5) is provided on both sides thereof with indent portions (6) aligned with the axial grooves (4A) and each defining the axial groove (4) of which volume (V4D) is to be included in said total volume (ΣVh), each of the indent portions (6) having an axially inner end terminated before the tyre equator by a distance L1 of 0.02 to 0.04 times the tread width (WT).

4. A heavy duty tyre according to claim 1 or 2, characterised in that the axial grooves (4) which comprise axially outward axial grooves (4C) extending from the tread edges (E) to the adjacent circumferential grooves (3C) and axially inward axial grooves (4A) extending axially inwardly from said adjacent circumferential grooves, and the depth (H3) of said axially outward axial grooves (4C) is not less than 10% and less than 25% of the depth of said axially inward axial grooves (4A).

5. A heavy duty tyre according to claim 2, characterised in that the depth (H3) of the outer axial grooves (4C) is not less than 10% and less than 25% of the depth of the middle axial grooves (4B).

6. A heavy duty tyre according to any one of the preceding claims, characterised in that each of said circumferential grooves (3) comprises alternate first inclined segments and second segments so as to provide a zigzag configuration, and said first segments are inclined at an angle of from 2 to 10 degrees with respect to the tyre equator.

7. A tyre according to any of claims 1 to 6, characterised in that each of said plurality of crosses (7A,7B,7C) are defined by two axial grooves each having one end opened to the same circumferential groove such that the plurality of crosses (7A,7B,7C) are each surrounded by the corners of four tread blocks.

8. A tyre according to claim 7, characterised in that the two axial grooves defining the cross are substantially straight grooves.

9. A tyre according to claim 8, characterised in that the two axial grooves are substantially arranged in line with each other.

## Patentansprüche

1. Schwerlastreifen mit einem Laufflächenabschnitt (12), wobei die Lauffläche (12) mit einer Vielzahl von Umfangsnuten (3) und einer Vielzahl von Axialnuten (4) versehen ist, die Umfangsnuten (3) sich kontinuierlich in der Umfangsrichtung des Reifens erstrecken, um die Lauffläche axial in Rippenabschnitte zu unterteilen, jede Axialnut (4) sich über einen der Rippenabschnitte hinweg erstreckt, so daß sie zumindest ein Ende aufweist, das zu einer der Umfangsnuten geöffnet ist, um den Rippenabschnitt in Laufflächenblöcke zu unterteilen, worin in dem Zustand, wo der Reifen auf seine reguläre Felge aufgezogen und auf seinen regulären Innendruck aufgepumpt und mit seiner regulären Last belastet ist, das Verhältnis (ΣVh/ΣVv) des Gesamtvolumens (ΣVh) der Axialnuten (4) in dem Bodenkontaktteil der Lauffläche zu dem Gesamtvolumen (ΣVv) der Umfangsnuten (3) in dem Bodenkontaktteil (S) im Bereich von 0,3 bis 0,6 liegt, dadurch gekennzeichnet, daß die Umfangsnuten (3) eine Breite von 1,0 bis 15% der Laufflächenbreite (WT) aufweisen, gemessen zwischen den Rändern der Lauffläche, und die Axialnuten (4) eine Breite von 1,0 bis 15% der Laufflächenbreite (WT) aufweisen, wobei die Umfangsnuten (3) und die Axialnuten (4) eine Vielzahl von Kreuzen (7A, 7B, 7C) definieren, die jeweils von Ecken von Laufflächenblöcken umgeben sind, alle Ecken (P1, P2, P3, P4, P5, P6) der Kreuze von zumindest einer der Umfangsnuten stumpfwinklige Ecken sind, und alle die Ecken (P1, P2, P3, P4, P5, P6) in jedem der Kreuze (7A, 7B, 7C) bei unterschiedlichen Positionen bezüglich sowohl der Umfangsals auch Axialrichtungen des Reifens angeordnet sind.

2. Schwerlastreifen nach Anspruch 1, dadurch gekennzeichnet, daß die Umfangsnuten (3) ein Paar innere Umfangsnuten (3A), die jeweils auf jeder Seite des Reifenäquators angeordnet sind, ein Paar mittlere Umfangsnuten (3B), die jeweils axial außerhalb von jeder inneren Umfangsnut angeordnet sind, und ein Paar äußere Umfangsnuten (3C) umfaßt, die jeweils zwischen jeder mittleren Umfangsnut (3B) und dem benachbarten Laufflächenrand (E) angeordnet sind, wobei die Axialnuten (4) innere Axialnuten (4A), die sich von den inneren Umfangsnuten (3A) zu den mittleren Umfangsnuten (3B) erstrecken, mittlere Axialnuten (4B), die sich von den mittleren Umfangsnuten (3B) zu den äußeren Umfangsnuten (3C) erstrecken, und äußere Axialnuten (4C) umfassen, die sich von den äußeren Umfangsnuten (3C) zu den Laufflächenrändern (E) erstrecken.

3. Schwerlastreifen nach Anspruch 2, dadurch gekennzeichnet, daß eine Mittelrippe (5), die zwischen den inneren Umfangsnuten (3A) definiert ist, in der Umfangsrichtung des Reifens kontinuierlich ist, daß die Mittelrippe (5) auf deren beiden Seiten mit Kerbabschnitten (6) versehen ist, die zu den Axialnuten (4A) ausgerichtet sind und jeweils die Axialnut (4) definieren, deren Volumen (V4D) in das Gesamtvolumen (ΣVh) einzuschließen ist, das jeder der Kerbabschnitte (6) ein axial inneres Ende aufweist, das vor dem Reifenäguator in einem Abstand L1 von 0,02 bis 0,04 mal die Laufflächenbreite (WT) endet.

4. Schwerlastreifen nach Anspruch 1 oder 2, dadurch gekennzeichnet, daß die Axialnuten (4), die axial äußere Axialnuten (4C), die sich von den Laufflächenrändern (E) zu den benachbarten Umfangsnuten (3C) erstrecken, und axial innere Axialnuten (4A) umfassen, die sich axial innen von den benachbarten Umfangsnuten erstrecken, und daß die Tiefe (H3) der axial äußeren Axialnuten (4C) nicht kleiner als 10% und kleiner als 25% der Tiefe der axial inneren Axialnuten (4A) ist.

5. Schwerlastreifen nach Anspruch 2, dadurch gekennzeichnet, daß die Tiefe (H3) der äußeren Axialnuten (4C) nicht kleiner als 10% und kleiner als 25% der Tiefe der mittleren Axialnuten (4B) ist.

6. Schwerlastreifen nach einem der vorhergehenden Ansprüche, dadurch gekennzeichnet, daß jede der Umfangsnuten (3) abwechselnde erste geneigte Segmente und zweite Segmente umfaßt, um eine zickzackförmige Konfiguration zu liefern, und daß die ersten Segmente unter einem Winkel von 2 bis 10 Grad bezüglich des Reifenäquators geneigt sind.

7. Reifen nach einem der Ansprüche 1 bis 6, dadurch gekennzeichnet, daß jede der Vielzahl von Kreuzen (7A, 7B, 7C) durch zwei Axialnuten definiert ist, die jeweils ein Ende aufweisen, das zu der gleichen Umfangsnut geöffnet ist, derart, daß die Vielzahl von Kreuzen (7A, 7B, 7C) jeweils von den Ecken von vier Laufflächenblöcken umgeben ist.

8. Reifen nach Anspruch 7, dadurch gekennzeichnet, daß die zwei Axialnuten, die das Kreuz definieren, im wesentlichen gerade Nuten sind.

9. Reifen nach Anspruch 8, dadurch gekennzeichnet, daß die zwei Axialnuten im wesentlichen in Reihe miteinander angeordnet sind.

## Revendications

1. Pneu pour poids lourd comprenant une partie formant bande de roulement (12), ladite bande de roulement (12) étant pourvue d'une pluralité de rainures circonférencielles (3) et d'une pluralité de rainures axiales (4), lesdites rainures circonférencielles (3) s'étendant en continu dans le direction circonférencielle du pneu de manière à diviser axialement la bande de roulement en parties formant nervures, chacune desdites rainures axiales (4) s'étendant en travers de l'une desdites parties formant nervure de manière à ce que au moins l'une de ces extrémités s'ouvre sur l'une desdites rainures circonférencielle pour diviser la partie formant nervure en blocs de bande de roulement, dans lequel dans l'état où le pneu est monté sur sa jante normale, gonflé à sa pression intérieure normale et chargé avec sa charge normale, le rapport (ΣVh/ΣVv) du volume total (ΣVh) desdites rainures axiales (4) dans la partie de la bande de roulement en contact avec le sol sur le volume total (ΣVv) desdites rainures circonférencielles (3) qui se trouvent dans la partie en contact avec le sol (S) est dans une plage allant de 0,3 à 0,6, caractérisé en ce que les rainures circonférencielles (3) ont une largeur allant de 1 à 15 % de la largeur de la bande de roulement (WT) mesurée entre les bords de la bande de roulement et les rainures axiales ont une largeur allant de 1 à 15% de la largeur de la bande de roulement (WT) lesdites rainures circonférencielles (3) et les dites rainures axiales (4) définissant une pluralité de croix (7A,7B,7C) entourée chacune par les coins de blocs de bande de roulement, tous les coins, (P1,P2,P3,P4,P5,P6) desdites croix d'au moins l'une des rainures circonférencielles étant des coins à angle obtus ; et tous lesdits coins (P1,P2,P3,P4,P5,P6) de chacune des croix (7A,7B,7C) sont disposées à différentes positions par rapport à la fois aux directions circonférencielle et axiale du pneu.

2. Pneu pour poids lourd selon la revendication 1, caractérisé en ce que lesdites rainures circonférencielles (3) comprennent une paire de rainures circonférencielles intérieures (3A) disposée chacune sur chaque côté de l'équateur du pneu, une paire de rainures circonférencielles centrales (3B) disposée chacune axialement à l'extérieur de chaque rainure criconférencielle intérieure, et une paire de rainures circonférencielles extérieures (3C) disposée chacune entre chacune desdites rainures circonférencielles centrales (3B) et le bord adjacent de la bande de roulement (E), en ce que lesdites rainures axiales (4) comprennent des rainures axiales intérieures (4A) s'étendant depuis les rainures circonférencielles intérieures (3A) jusqu'aux rainures circonférencielles centrales (3B), les rainures circonférencielles centrales (3B), jusqu'aux rainures axiales centrales (4B) s'étendant depuis les rainures circonférencielles centrales (3B) jusqu'aux rainures circonférencielles extérieures (3C), et les rainures axiales extérieures (4C) s'étendant depuis les rainures circonférencielles extérieures (3C) jusqu'aux bords de la bande de roulement (E).

3. Pneu pour poids lourd selon la revendication 2, caractérisé en ce qu'une nervure centrale (5) définie entre les rainures circonférencielles intérieures (3A) est continue dans la direction circonférencielle du pneu, en ce que ladite nervure centrale (5) est pourvue sur ses deux côtés de parties entaillées (6) alignées avec les rainures axiales (4A) et définissant chacune la rainure axiale (4) dont le volume (V4D) va être compris dans ledit volume total (ΣVh), chacune des parties entaillées (6) ayant une extrémité axialement intérieure qui se termine avant l'équateur du pneu à une distance L1 allant de 0,02 à 0,04 fois la largeur de la bande de roulement (WT).

4. Pneu pour poids lourd selon la revendication 1 ou 2, caractérisé en ce que les rainures axiales (4) qui comprennent les rainures axiales axialement à l'extérieur (4C) s'étendent depuis les bords de la bande de roulement (E) jusqu'aux rainures circonférencielles voisines (3C) et en ce que les rainures axiales axialement vers l'intérieur (4A) s'étendent axialement vers l'intérieur desdites rainures circonférencielles voisines, et en ce que la profondeur (H3) desdites rainures axiales axialement vers l'extérieur (4C) n'est pas inférieure à 10% et est inférieure à 25% de la profondeur desdites rainures axiales axialement vers l'intérieur (4A).

5. Pneu pour poids lourd selon la revendication 2, caractérisé en ce que la profondeur (H3) des rainures axiales extérieures (4C) n'est pas inférieure à 10% et est inférieure à 25% de la profondeur des rainures axiales centrales (4B).

6. Pneu pour poids lourd selon l'une quelconque des revendications précédentes, caractérisé en ce que chacune desdites rainures circonférencielles (3) comprend des premiers segments et des seconds segments inclinés alternés de manière à créer une configuration en zigzag, et en ce que lesdits premiers segments sont inclinés d'un angle allant de 2 à 10 degrés par rapport à l'équateur du pneu.

7. Pneu selon l'une quelconque des revendications 1 à 6, caractérisé en ce que chaque croix de ladite pluralité de croix (7A,7B,7C) est définie par deux rainures axiales ayant chacune une extrémité ouverte vers la même rainure circonférencielle, de telle façon que chaque croix de la pluralité de croix (7A,7B,7C) est entourée par les coins de quatre blocs de la bande de roulement.

8. Pneu selon la revendication 7, caractérisé en ce que les deux rainures axiales définissant la croix sont essentiellement des rainures droites.

9. Pneu selon la revendication 8, caractérisé en ce que les deux rainures axiales sont essentiellement disposées en ligne l'une avec l'autre.
